Europäisches Patentamt

European Patent Office

Office européen des brevets

(11) Veröffentlichungsnummer: **0 017 250**
**B1**

# (12) EUROPÄISCHE PATENTSCHRIFT

(45) Veröffentlichungstag der Patentschrift: **08.02.84**

(21) Anmeldenummer: **80101868.0**

(22) Anmeldetag: **08.04.80**

(51) Int. Cl.³: **F 26 B 7/00, F 26 B 5/04, A 23 P 1/00**

(54) Vakuumtrocknungsverfahren und -vorrichtung für empfindliche Güter und danach erhältliche Trockenprodukte.

(30) Priorität: **07.04.79 DE 2914181**

(43) Veröffentlichungstag der Anmeldung:
**15.10.80 Patentblatt 80/21**

(45) Bekanntmachung des Hinweises auf die Patenterteilung:
**08.02.84 Patentblatt 84/6**

(84) Benannte Vertragsstaaten:
**DE FR IT SE**

(56) Entgegenhaltungen:
**CH - A - 131 416**
**CH - A - 197 048**
**FR - A - 1 398 812**
**US - A - 1 801 687**
**US - A - 2 512 897**

**K. KRÖLL, "Trockner und Trocknungsverfahren",
Band II aus Trocknungstechnik, 2. Auflage,
Springer Verlag 1978, Seite 475**

(73) Patentinhaber: **Kernforschungsanlage Jülich
Gesellschaft mit beschränkter Haftung
Postfach 1913
D-5170 Jülich (DE)**

(72) Erfinder: **Dias, Francisco Joachim
An der Lünette 3
D-5170 Jülich (DE)**
Erfinder: **Hannen, Willi
Heimbacherstrasse 8
D-5170 Jülich (DE)**
Erfinder: **Luhleich, Hartmut, Dr.
Chlodwigplatz 15
D-5160 Düren (DE)**
Erfinder: **Pflaum, Peter
Gutenbergstrasse 24
D-5170 Jülich (DE)**

Vakuumtrocknungsverfahren und-vorrichtung für empfindliche Güter und danach erhältliche Trockenprodukte

Die Erfindung bezieht sich auf ein Verfahren zum Trocknen empfindlicher Güter, insbesondere der Nahrungs- oder Pharmaindustrie, in Form von ausgebreitetem Stück- oder Schüttgut innerhalb eines evakuierbaren Behälters, bei dem der vom Trockengut abgegebene Wasserdampf unmittelbar innerhalb des Behälters an einer auf neidrigerer Temperatur gehaltenen Kondensationsfläche in flüssiger Form kondensiert und gesammelt abgeführt wird, sowie auf eine Vorrichtung zur Durchführung des Verfahrens, und sie umfaßt danach erhältliche Trockenprodukte der Nahrungsmittel- und Pharmaindustrie.

Das Trocknen empfindlicher Güter spielt insbesondere in der Nahrungsmittel- und Pharmaindustrie eine wichtige Rolle, um verderbliche Produkte wie Obst, Gemüse, Fleisch etc. sowie Arzneipflanzen und Präparate lagerfähig zu machen und auch den Transport zu erleichtern.

Ein Trockenverfahren gemäß dem Oberbegriff des Patentanspruchs 1 ist seit langem bekannt (US—A—2 512 897), bei dem der Druck im Trockenraum durch die Saugwirkung, die sich beim Entleeren eines auf hohem Niveau (z.B. in 10 m Höhe) plazierten Wassertanks ergibt, allgemein auf Werte bis etwa 50 Torr (28″ of mercury) vermindert werden soll. Über die Trockenbedingungen wird relative wenig ausgesagt. Als Beispiel wird lediglich das Trocknen von rohem Ei bei 71°C und etwa 100 Torr genannt, während niedrigere Drucke (29″ oder 30″) bei gewissen Fischsorten nicht schädlich sein sollen.

Dieses relative umständliche Verfahren hat jedoch keinen Eingang in die Praxis gefunden.

Nach derzeit herrschender Meinung wird das Gefriertrocknen als die optimale Methode zum Trocknen empfindlicher Güter emfohlen, insbesondere, wenn Aromastoffe bestmöglich erhalten bleiben sollen (s. Ullmann's "Enzyklopädie der Technischen Chemie", Band 16 (1978), Seite 63 bzw. K. Kröll "Trockner und Trocknungs-verfahren", Band II, aus "Trocknungstechnik", 2. Auflage, Springer-Verlag 1978, Seite 503).

Die Praxis ergibt jedoch, daß auch beim Gefriertrocknen, bei dem die entwickelten Dämpfe oder doch zumindest Restgase üblicherweise mit einem mehr oder minder starken Pumpsystem laufend abgepumpt werden, erhebliche Qualitätsminderungen wie der Verlust an Aromastoffen, Verfärbungen und Denaturierungen in Kauf genommen werden müssen.

Untersuchungen zeigen nämlich, daß der Zellverband von biologischem Material beim Gefriertrocknen durch Kristallisation beschädigt wird, was den Verlust an flüchtigen Aromastoffen begünstigt und das Aussehen des Produkts beeinträchtigt, und daß ferner der Feuchtigkeitstransport im Trockengut problematisch wird, so daß üblicherweise nur fein zerteiltes Material getrocknet werden kann.

Aufgabe der Erfindung ist es daher, ein Verfahren vorzusehen, das eine bislang nicht erreichte schonende Trocknung empfindlicher Güter auch in grobstückiger Form ermöglicht.

Das zur Lösung dieser Aufgabe entwickelte erfindungsgemäße Trockenverfahren der eingangs genannten Art ist dadurch gekennzeichnet, daß man das Gut in einem hochvakuumdichten Behälter entwässert, der mit einer für Enddrucke von $\geq$0,1 mbar geeigneten Vakuumpumpe bis zum Einsetzen eines deutlichen Kondensatflusses evakuiert und dann von der Vakuumpumpe getrennt und bei merklichem Nachlassen des Kondensatflusses nachevakuiert wird.

Auf diese Weise können empfindliche Güter, insbesondere Nahrungsmittel oder Drogen, mit besonderem Erfolg getrocknet werden unter Erzielung von Produkten, die im Aussehen und Wirkstoffgehalt dem nicht getrockneten Gut praktisch entsprechen. Das Verfahren arbeitet zudem schnell und mit verringerter Leistung und ohen Belastung der Pumpen durch große Flüssigkeitsmengen.

Ein Destillier- und Trockenverfahren, bei dem Verdampfung und Kondensation nebeneinander in einem evakuierten Raum erfolgen sollen, ist zwar generell aus der CH—A 131 416 von 1929 bekannt.

Auch sind aus dem obengenannten Buch von Kröll, siehe insbesondere Seite 475, Grobvakuumtrockner beschrieben, die des Trocknen temperaturempfindlicher Stoffe der pharma zeutischen und Nahrungs mittelindustrie ermöglichen.

Bei diesen Verfahren wurde jedoch nicht zwischen den abzutrennenden Dämpfen und nicht kondensierbaren Gasen unterschieden und nicht auf Hochvakuumdichtigkeit geachtet. Es wurde zudem nocht nicht erkannt war, daß durch ein Trockenverfahren der im Patentanspruch 1 genannten Art eine besonders vorteilhafte Trocknung derselben, selbst im Vergleich zur Gefriertrocknung, möglich sein würde.

Beim erfindungsgemäßen Verfahren wird lediglich zu Beginn des Trocknungsvorganges der Trockenraum mit einer einfachen, für Enddrucke von $\geq$0,1 mbar geeigneten Vakuumpumpe bis zum Beginn eines deutlichen Kondensatflusses evakuiert und dann abgeschlossen, wonach die Pumpe abgestellt werden kann. Dieses einleitende Evakuieren, das etwa 10 bis 20 Minuten lang dauert, führt zu einer ausreichenden Entfernung der nicht-kondensierbaren oder Restgase, die vom einleitend reichlich gebildeten Wasserdampf mitgenommen und so bis auf relativ niedrige Restdrucke aus dem Trockenraum verdrängt werden, was sich am lebhaft einsetzenden Kondensatfluß bemerkbar macht.

Der Partialdruck der nicht-kondensierbaren Gase bleibt in dem hochvakuumdichten abgeschlossenen Trockenbehälter auf seinem zu Beginn erzeugten geringen Wert, der lediglich durch Gasabgabe vom Trockengut erhöht werden kann, was sich an der Abnahme des Kondensatflusses zeigt, woraufhin dann nachevakuiert wird.

Das ausgebreitete Trockengut wird vorzugsweise nach Erreichen des Enddrucks und Absperren der Pumpe auf eine Temperatur von maximal 50 bis 60°C erwärmt, die durch Messung der Guttemperatur und Regelung der Heizmittelzufuhr eingestellt werden kann. Zu Beginn des Trockenvorganges wird allerdings durch die zunächst sehr reichliche Verdampfung nur ein geringerer Temperaturwert erzielt. Besonders empfindliche Güter sollten bei maximalen Guttemperaturen von etwa 30°C getrocknet werden.

Die Kondensatortemperatur sollte >0°C, aber möglichst niedrig sein; sie kann bei Verwendung von Kühlwasser für die Kondensatorkühlung bei etwa 12 bis 18°C liegen. Höhere Temperaturen ergeben einern geringeren Massentransport. Üblicherweise wird eine Temperaturdifferenz zwischen dem Trockengut und der Kondensatorfläche von etwa 30 bis 35°C vorgesehen.

Eine relative große Kondensatorfläche kann den Massentransport des abzutrennenden Wasserdampfs begünstigen, wobei der Kondensator zweckmäßiger-weise möglichst nahe am Trockengut angeordnet und so konzipiert ist, daß das gebildete Kondensat von allein in einen Kondensatbehälter abfließt, der vom Trockenraum absperrbar und unter Betrieb entleerber ist. Dieser Sammelbehälter für das Kondensat kann -wenn er selbst nicht gekühlt wird— Raumtemperatur erreichen. Liegt die Kondensatortemperatur unterhalb Raumtemperatur, was üblicherweise der Fall sein wird, so findet dann ein Kondensatrücktransport vom Kondensatbehälter an den Kondensator statt, was unerwünscht ist. Es ist daher zweckmäßig, den Kondensatbehälter ebenfalls zu kühlen, etwa mittels eines kühlmitteldurchflossenen Doppelmantels oder durch Kühlschlangen, die durch den Kondensatbehälter gehen.

Das ausgebreitete Trockengut wird vorzugsweise von Zeit zu Zeit oder fortlaufend durch einen eingebauten Rührer oder besser Umwender gewendet. Dadurch lassen sich die Trockenzeiten wesentlich verkürzen.

Bei der Trocknung von empfindlichen Gütern, wie zum Beispiel Kräutern oder anderen Pflanzen, die selbst nur wenig Feuchtigkeit enthalten, verdampft während des einleitenden Evakuierens wenig Wasser. Dadurch wird aber der Effekt der Luftverdrängung aus dem Trockenraum durch den entstehenden Wasserdampf verkleinert. In diesem Falle empfiehlt es sich, vor dem Evakuieren zusätzlich Wasser in den Trockenraum zu bringen, zum Beispiel in den Kondensatbehälter. Wird nun evakuiert, verdampft dieses Wasser und vertreibt dadurch die Luft.

Besonders geringe Restfeuchten werden erhalten, wenn abschließend nochmals nachevakuiert wird.

Durch die erfindungsgemäße Arbeitsweise werden Produkte von bislang nicht erreichbarer Güte erhalten, deren Zellverband weitgehend unzerstört und deren Eiweiß nicht denaturiert oder verändert ist und die praktisch den ursprünglichen Gehalt an Aroma- und Wirkstoffen aufweisen.

Die schonende Trocknung gemäß der Erfindung spielt insbesondere bei allen Eiweißstoffen eine große Rolle, die bei Temperaturen zwischen 50 und 60°C normalerweise koagulieren und damit eine irreversible Veränderung erfahren. Auch eine große Anzahl von Zuckern werden bei erhöhter Temperatur irreversibel umgewandelt. So dürfen z.B. Zwiebeln nicht über 50°C erhitzt werden, weil sonst der in relativ hohem Anteil vorhandene Zucker umgewandelt wird. Auch die Schonung wichtiger Vitamine durch des erfindungsgemäße Verfahren dürfte von besonderem Interesse sein.

Diese schonende Trocknung gemäß der Erfindung durch unmittelbaren Dampfübergang und Kondensatfortführung bei relativ niedrigen Temperaturen unter Ausschluß von Restgasen, wie insbesondere Luft, erfolgt im übrigen unerwartet rasch und bis zu erstaunlich geringen Restfeuchten.

Bei der herkömmlichen Trocknung wird die Flüssigkeit dagegen zu Anfang an der Oberfläche des Trockengutes sehr schnell verdampft, weil der Druck im Gasraum sehr klein gehalten wird. Dadurch entsteht sehr schnell eine trockene Oberflächenschicht, die einen Transport der Feuchte in flüssiger Form aus den tiefergelegenen Schichten des Gutes verhindert und offensichtlich veränderungsanfällig ist und zu Aromaverlusten bei den Nahrungsmitteln führt.

Voraussetzung für ein einwandfreie Funktionieren des erfindungsgemäßen Vakuumtrockenverfahrens ist folgende Bedingung:

Obwohl der Trockenvorgang bei relativ hohem Druck abläuft (vorzugsweise bei etwa 5 mbar bis 30 mbar), muß der Trockner selbst hochvakuumdicht ausgelegt sein, das heißt für Drücke von etwa $10^{-4}$mbar bis $10^{-5}$mbar. Diese Bedingung hat ihren Grund darin, daß der eigentliche Trockenvorgang in dem von der Vakuumpumpe abgeschlossenen Trockner abläuft. Die Trockenzeiten betragen dabei Stunden und in dieser Zeit muß der Partialdruck der unkondensierbaren Gase, das heißt im Normalfall der Luft, so niedrig wie möglich gehalten werden. Anders ausgedrückt, darf das abgeschlossene Trocknergefäß nur eine ganz geringe Leckrate haben, obwohl der Druck im Trockenraum relativ hoch ist. Mit zunehmendem Partialdruck der unkondensierbaren Gase im Trockenraum sinkt der Massentransport des Flüssigkeitsdampfes vom Trockengut zur Kondensatorfläche stark ab und die Trockengeschwindigkeit verringert sich entsprechend.

Ein weiteres Merkmal des erfindungsgemäßen Verfahrens besteht darin, daß für die zu Beginn des Trockenprozesses notwendige Evakuierung des Trockenraums keine aufwendigen Hochvakummpumpsysteme erforderlich sind. Es genügt vielmehr eine einfache Vakuumpumpe, deren Enddruck bei $10^{-1}$ mbar liegt, da die infolge des Evakuierens aus dem Trockengut verdampfende Flüssigkeit die zu Beginn vorhandene Luft in relativ kurzer Zeit verdrängt, der Partialdruck der Restluft im Trockner also nicht durch den Enddruck der Vakuumpumpe, sonderen durch die Evakuierungsdauer bestimmt wird.

Bei üblichen Dimensionieren von Trockner und Vakuumpumpe werden Zeiten in der Gegend von 5 bis 20 Minuten je nach Trockengut benötigt. Eine nicht ausreichende Evakuierung zeigt sich im allgemeinen an einem ungenügenden Kondensatfluß.

Der sonst übliche Kondensator zwischen Trockenkammer und Vakuumpumpe ist bei dem vorliegenden Verfahren überflüssig, es sei denn, die abzudampfende Flüssigkeit ist toxisch oder aggressiv. In diesem Falle werden die kondensierbaren Gase hinter dem Pumpenausgang aufgefangen.

Zweckmäßigerweise verwendet man zur Evakuierung eine Flüssigkeitsring-Vakuumpumpe mit Gasstrahler anstelle der üblichen Ölpumpen, da bei mit Öl arbeitenden Vakuumpumpen trotz Fahrens mit Gasballast infolge der hohen Flüssigkeitsdurchsätze häufige Ölwechsel notwendig sind.

Ganz allgemein bietet das erfindungsgemäße Verfahren gegenüber den bisher bekannten eine Reihe beachtlicher Vorteile:

Der Massentrom zwischen dem Trockengut und dem Kondensator ist sehr hoch.

Das Verfahren zeichnet sich außerdem durch eine hohe Wirtschaftlichkeit aus, denn es wird weder Energie zum Gefrieren des Trockengutes noch zur Erreichung hoher Guttemperaturen, noch zum kontinuierlichen Betrieb einer Vakuumpumpe benötigt. Es genügt vielmehr eine relativ kleine Wärmemenge zur Aufheizung des Trockengutes und auch die Kühlleistungen sind niedrig. Besonders wirtschaftlich wird das Verfahren jedoch durch den Einsatz einer Wärmepumpe. Auch für das Anlegen des Vakuums ist nur kurzzeitig Energie für die Pumpe notwendig. Es genügt normalerweise, wenn ein Vakuum von etwa 10 mbar erreicht ist. Die Luft ist dann durch die verdampfende Flüssigkeit entfernt, der Trockenraum kann abgeschlossen und die Pumpe abgestellt werden.

Gemäß der Erfindung kann das Trockengut je nach Trockengutbeschaffenheit in Schütthöhen bis zu 8 cm einwandfrei getrocknet werden, während bislang üblicherweise Schütthöhe von bis zu 4 cm angewandt werden.

Schon bei Trockenguttemperaturen, die nur relativ wenig über der Kondensatortemperatur liegen, ist eine gute Trocknungsgeschwindigkeit zu erzielen. Bei Gütern der Nahrungsmittelindustrie wird man das Trockengut zum Beispiel auf maximal 50 °C erwärmen, während die Kondensatortemperatur 10 °C bis 15 °C beträgt.

Wegen des verglichen mit anderen Vakuumtrockenverfahren, hohen Dampfdruckes im Trockenraum trocknet die oberflächennahe Schicht bei einer Bodenkontaktheizung zum Beispiel erst zum Schluß des Trockenprozesses aus, das heißt auch innerhalb des Trockengutes liegt ein optimaler Massentransport vor. Man erreicht ohne weiteres Restfeuchten im Trockengut von 1 Gew.-% und weniger.

Wegender niedrigen Gutstemperaturen, die eingestellt werden können, ist das Verfahren sehr gut geeignet zum schnellen Trocknen temperaturempfindlicher Güter, insbesondere von Lebensmitteln und pharmazeutischen Produkten.

Für die Trocknung von empfindlicher Lebensmitteln oder Pharmazeutika hat das erfindungsgemäße Verfahren noch den weiteren Vorteil, daß leichtverdampfbare Aromastoffe oder Wirkstoffe hierbei nur in geringem Maße mit der Feuchtigkeit verdampft werden, da der Gesamtdruck im Trockenraum wesentlich höher liegt also bei anderen Vakuumtrockenverfahren.

Liegt der Feuchte in Form von Lösungsmitteln oder agressiven Medien (zum Beispiel Säuren) vor, so ist die Belastung der Vakuumpumpe durch diese Stoffe denkbar gering, da die Pumpe nur kurzfristig läuft.

Eine Vorrichtung zur Durchführung des erfindungsgemäßen Verfahrens wird im folgenden beschrieben. Selbstverständlich sind auch andere Vorrichtungen möglich, sofern sie nur die Kriterien der vorliegenden Erfindung haben: Vakuumtrockner nach dem Verdampfungsprinzip, bei denen sich der Kondensator im Trockenraum befindet, keine Trennwand zwischen Trockengut und Kondensator vorhanden ist, der Trockenraum nach Erreichen des Vakuums (das mittels einer ins Freie arbeitenden einfachen Vakuumpumpe erzeugt wird) während des Trockenprozesses von der Pumpe abgeschlossen werden kann und eine Leckrate, wie sie für Hochvakuumanlagen üblich ist, nicht übersteigt.

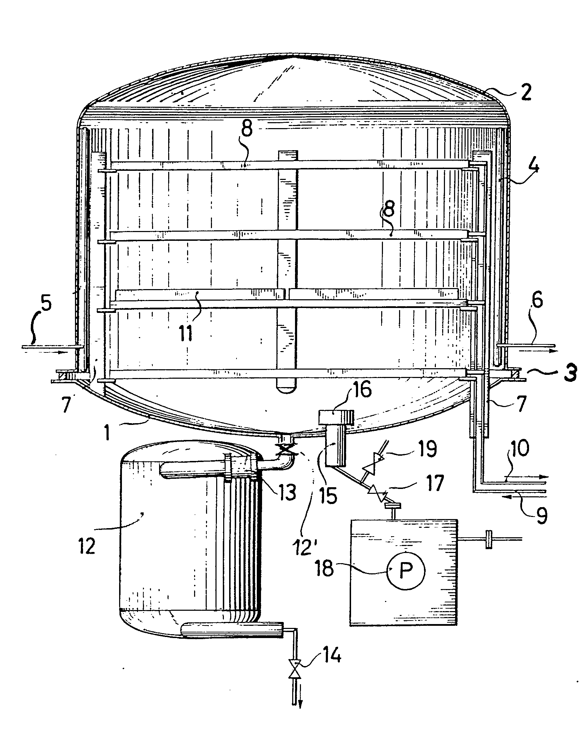

Figur 1 zeigt eine schematische Zeichnung eines nach dem erfindungsgemäßen Verfahren arbeitenden Vakuumtrockners. Der Vakuumbehälter besteht aus einem feststehenden Boden (1) und einer nach oben beweglichen Haube (2). Eine Dichtung (3) sorgt für einen hochvakuumdichten Verschluß der beiden Behälterteile. An der Innenwand der Haube ist der Kondensator (4) mit dem Kühlmittelzulauf (5) und -ablauf (6) angeordnet, von dem das gebildete Kondensat nach unten auf den Boden (1) abläuft. Im Innern der aufgesetzten Haube (2) befinden sich die auf dem Boden des Vakuumbehälters fest angebrachten Stützen (7), welche die Heizplatten (8) tragen. Diese werden mit einem bei (9) einlaufenden und bei (10) austretenden Heizmedium erhitzt. Auf den Heizplatten (8) befinden sich die Schalen mit dem Trockengut (11). Das vom Kondensator (4) abtropfende Kondensat gelangt über das Hochvakuumventil (12') in den Kondensatbehälter (12), wobei die Flüssigkeit das Schauglas (13) passiert. Über ein hochvakuumdichtes Ventil (14) kann der Kondensatbehälter entleert werden und nach der Entleerung durch Schließen von Ventil (14) bei durch Ventil (12') abgeschlossenem Trockenraum evakuiert werden. Die Vakuumpumpe (18) ist über das Hochvakuumventil (17) mit dem Stutzen (15) mit aufgesetzter Haube (16) verbunden, über den der gesamte Vakuumbehälter evakuiert werden kann. Über das Hochvakuumventil (19) wird der Trockner nach dem Trockenvorgang belüftet.

Die Anordnung von Gutträger und Kondensator kann selbstverständlich auch abweichend gestaltet werden, wie z.B. durch zwei ineinandergepaßte Spiral- bzw. Wendelflächen.

Anwendungsbeispiel 1

Trocknung von Kartoffelstückchen

25 kg Kartoffelstückchen mit einer Feuchte von 85 Gew.% wurden in die Schalen des Vakuumtrockners mit einer Schütthöhe von etwa 2 cm eingefüllt. Die Oberfläche des Trockengutes betrug 1,6 m². Zunächst wurde etwa 10 Min. evakuiert, wobei ein Druck von etwa 14 mbar erreicht wurde. Die Kühlwassertemperatur betrug 14°C. Nach dem Evakuieren wurde der Hochvakuumbehälter von der Pumpe abgeschlossen und die Vakuumpumpe abgestellt. Die Heizböden wurden aufgeheizt, wobei im 1. Trockenabschnitt eine Gutstemperatur von 24°C erreicht wurde. Nach 3 h war der Druck im Vakuumbehälter durch ein Nachgasen des Trockengutes auf etwa 20 mbar gestiegen. Es wurde 10 Min. nachevakuiert und dann wieder der Vakuumtrockner abgeschlossen. Nach 6 h war die Trocknung der Kartoffelstückchen beendet. Die maximale Gutstemperatur betrug zum Schluß der Trocknung 46°C, die Restfeuchte des Trockenguts 10,2 Gew.-% und die über die gesamte Trocknung gemittelte Trockengeschwindigkeit etwa 2 kg/h×m².

Anwendungsbeispiel 2

Trocknung von Zwiebelringen

36 kg Zwiebelringe mit einer Feuchte von 82 Gew.-% wurden in die Schale des Vakuumtrockners mit einer Schütthöhe von 4 cm eingefüllt. Die Oberfläche des Trockengutes betrug 3,2 m². Zunächst wurde etwa 10 Min. evakuiert, wobei ein druck von etwa 14 mbar erreicht wurde. Die Kühlwassertemperatur betrug 13°C. Nach dem Evakuieren wurde der Vakuumbehälter von der Pumpe abgeschlossen und die Vakuumpumpe abgestellt. Die Heizböden wurden aufgeheizt, wobei eine Gutstemperatur von maximal 30°C erreicht wurde. Nach 4,5 h war der Druck auf etwa 18 mbar durch das Nachgasen des Trockengutes gestiegen. Es wurde belüftet und das Trockengut von Hand gewendet. Danach wurde erneut etwa 10 Min. evakuiert. Nach 9 h war die Trocknung der Zwiebelringe beendet. Die maximale Gutstemperatur betrug zum Schluß der Trocknung 35°C, die Restfeuchte des Trockengutes 8 Gew.-% und die über die gesamte Trocknung gemittelte Trockengeschwindigkeit 1 Kg/h×m².

Anwendungsbeispiel 3

Trocknung eines Pulvers aus binderumhüllten Kohlenstoffkörpern

64 kg eines Pulvers aus binderumhüllten Körnern mit einer Feuchte von etwa 50 Gew.-% wurden in die Schalen des Vakuumtrockners mit einer Schütthöhe von etwa 4 cm eingefüllt. Die Oberfläche des Trockengutes betrug 3,2 m². Zunächst wurde etwa 10 Min. evakuiert, wobei ein Druck von etwa 10 mbar erreicht wurde. Nach 13 h war die Trocknung des Pulvers beendet. Die maximale Gutstemperatur betrug zum Schluß der Trocknung 48°C, die Restfeuchte des Trockengutes 1 Gew.-% und die über die gesamte Trocknung gemittelte Trockengeschwindigkeit etwa 0,8 kg/h×m².

**Patentansprüche**

1. Verfahren zum Trocknen empfindlicher Güter, insbesondere der Nahrungs- oder Pharmaindustrie, in Form von ausgebreitetem Stück- oder Schüttgut innerhalb eines evakuierbaren Behälters, bei dem der vom Trockengut abgegebene Wasserdampf unmittelbar innerhalb des Behälters an einer auf niedrigerer Temperatur gehaltenen Kondensationsfläche in flüssiger Form kondensiert und gesammelt abgeführt wird, dadurch gekennzeichnet, daß man das Gut in einem hochvakuumdichten Behälter entwässert, der mit einer für Enddrucke von ≳0,1 mbar geeigneten Vakuumpumpe bis zum Einsetzen eines deutlichen Kondensatflusses evakuiert und dann von der Vakuumpumpe getrennt und bei merklichem Nachlassen des Kondensatflusses nachevakuiert wird.

2. Verfahren nach Anspruch 1, dadurch gekennzeichnet, daß der Behälter auf Drucke von etwa 5 bis 30 mbar evakuiert, das Gut vor, während oder insbesondere nach dem Evakuieren auf eine Temperatur von maximal etwa 50°C aufgeheizt und der gebildete Wasserdampf an einem auf etwa 12 bis 18°C gekühlten Kondensatabscheider abgeschieden wird.

3. Verfahren nach Anspruch 1 oder 2, dadurch gekennzeichnet, daß für das Trocknen von relativ feuchtigkeitsarmen Gütern zu Beginn Wasser in den Trockenraum insbesondere den Kondensatsammler gegeben wird.

4. Verfahren nach Anspruch 1 oder 2, dadurch gekennzeichnet, daß das Trockengut in einer Schütthöhe von nicht mehr als 6 cm bis 8 cm durch den Trockenraum geführt wird.

5. Verfahren nach Anspruch 3, dadurch gekennzeichnet, daß das Trockengut im Trockenraum gerüttelt oder gewendet wird.

6. Verfahren in Abwandlung von Anspruch 1, dadurch gekennzeichnet, daß man vom Trockengut abgegebene toxische oder agressive Medien hinter der Vakuumpumpe auffängt.

7. Vorrichtung zur Durchführung des Verfahrens nach Anspruch 1 mit einer Trockenkammer, in der ein gekühlter Kondensator in unmittelbarer Nachbarschaft zu einem heizbaren Trockengutträger angeordnet ist, dadurch gekennzeichnet, daß die Trockenkammer (1,2) hochvakuumdicht ausgebildet und an eine Enddrucke von etwa 0,1 mbar erreichende Vakuumpumpe angeschlossen ist.

8. Vorrichtung nach Anspruch 7, gekennzeichnet durch eine konzentrische Anordnung von Trockengutträger (8) und Kondensator (4).

9. Vorrichtung nach Anspruch 7 oder 8, dadurch gekennzeichnet, daß der Trockengutträger (8) durch übereinander angeordnete Böden gebildet wird, die von einem zylindrischen Kondensator (4) umschlossen werden.

10. Vorrichtung nach Anspruch 9, dadurch gekennzeichnet, daß der Trockengutträger und der Kondensator durch zwei ineinandergepaßte Spiral- bzw. Wendelflächen gebildet werden.

11. Trockengüter der Nahrungsmittel- und Pharmaindustrie mit einem der Haltbarkeit angemessenen Wassergehalt, deren Zellstrucktur, Eiweiß sowie Aroma- und Wirkstoffgehalte praktisch denen des nichtgetrockneten Guts entsprechen, erhältlich nach dem Verfahren gemäß Anspruch 1.

**Revendications**

1. Procédé pour le séchage de produits sensibles, notamment de l'industrie alimentaire ou de l'industrie pharmaceutique, sous la forme d'un produit étalé en morceaux ou en vrac à l'intérieur d'un récipient, dans lequel le vide peut être fait, selon lequel la vapeur d'eau évacuée du produit à sécher sous la forme liquide directement à l'intérieur du récipient sur une surface de condensation maintenue à une température assez basse et est évacuée une fois collectée, caractérisé par le fait qu'on déshydrate le produit dans une enceinte étanche au vide poussé dans laquelle on réalise le vide avec une pompe à vide appropriée pour obtenir des pressions finales $\geq$0,1 mbar, jusqu'à l'apparition d'un écoulement net du condensat et qu'on déconnecte ensuite de la pompe à vide et dans laquelle on réalise à nouveau le vide dans le cas d'une diminution notable de l'écoulement du condensat.

2. Procédé suivant la revendication 1, caractérisé par le fait qu'on réalise le vide dans l'enceinte à des pressions d'environ 5 à 30 mbars, qu'avant, pendant ou notamment après l'établissement du vide, ou chauffe le produit à une température égale au maximum à environ 50°C et que l'on sépare la vapeur d'eau formée, sur un condenseur refroide à environ 12 à 18°C.

3. Procédé suivant la revendication 1 ou 2, caractérisé par le fait que pour le séchage de produits relativement pauvres en humidité, on introduit de l'eau, au départ, dans la chambre de séchage, notamment dans la chambre du condensat.

4. Procédé selon la revendication 1 ou 2, caractérisé par le fait que l'on introduit le produit à sécher dans la chambre de séchage, sur une hauteur en vrac ne dépassant pas 6 à 8 cm.

5. Procédé suivant la revendication 3, caractérisé par le fait qu'on agite ou on retourne le produit à sécher dans la chambre de séchage.

6. Procédé modifié par rapport à la revendication 1, caractérisé par le fait qu'on collecte des fluides toxiques ou corrosifs extraits du produit à sécher, en aval de la pompe à vide.

7. Dispositif pour la mise en oeuvre du procédé suivant la revendication 1, comportant une chambre de séchage, dans laquelle un condenseur refroidi est disposé à proximité immédiate d'un support pouvant être chauffé du produit à sécher, caractérisé par le fait que la chambre de séchage (1,2) est réalisée en étant étanche au vide poussé et est raccordée à une pompe à vide fournissant des pressions finales d'environ 0,1 mbar.

8. Dispositif suivant la revendication 7, caractérisé par une disposition concentrique du support (8) du produit à sécher et du condenseur (4).

9. Dispositif suivant la revendication 7 ou 8, caractérisé par le fait que le support (8) du produit à sécher est formé par des plateaux superposés qui sont entourés par un condenseur cylindrique (4).

10. Dispositif suivant la revendication 9, caractérisé par le fait que le support du produit à sécher et le condenseur sont formés par deux surfaces spiralés ou hélicoïdales emboîtées l'une dans l'autre.

11. Produits séchés de l'industrie alimentaire et de l'industrie pharmaceutique possédant une teneur en eau convenant pour la conservabilité et dont la structure cellulaire, la protéine ainsi que la teneur du point de vue arôme et la teneur en principe actif correspondent pratiquement à celles de produit non séché, pouvant être obtenus conformément au procédé selon la revendication 1.

**Claims**

1. Process for the drying of delicate goods, more particularly in the foodstuffs or pharmaceutical industries, in the form of material spread out in unit form or bulk form within an evacuatable container, wherein the water vapour given off by the material being dried is condensed in liquid form directly within the container at a condensation surface kept at a relatively low temperature, and collected before being discharged, characterised in that the material is dewatered in a container which is tight to high vacuums and which is evacuated with a vacuum pump suitable for end pressures of $\geq 0.1$ mbar until a noticeable condensate flow sets in, and is then separated from the vacuum pump and, with a considerable slackening of the condensate flow, is subjected to post-evacuation.

2. Process according to claim 1, characterised in that the container is evacuated to pressures of approximately 5 to 30 mbar, the material is heated to a temperature of at maximum about 50°C before, during, or more particularly after the evacuation, and the water vapour formed is separated at a condenser cooled to about 12 to 18°C.

3. Process according to claim 1 or 2, characterised in that, for the drying of relatively low-moisture goods, water is at the beginning put into the drying chamber, more particularly the condensate collector.

4. Process according to claim 1 or 2, characterised in that the drying material is taken through the drying chamber in a bed the height of which is not more than 6 cm to 8 cm.

5. Process according to claim 3, characterised in that the drying material is shaken or turned in the drying chamber.

6. Process modified relatively to that of claim 1, characterised in that toxic or corrosive media given off by the drying material are collected up downstream of the vacuum pump.

7. Apparatus for carrying out the process according to claim 1, with a drying chamber in which a cooled condenser is arranged in the immediate vicinity of a heatable drying material support, characterised in that the drying chamber (1,2) is constructed to be sealing-tight to high vacuum, and is connected to a vacuum pump achieving end pressures of approximately 0.1 mbar.

8. Apparatus according to claim 7, characterised by a concentric arrangement of drying material support (8) and condenser (4).

9. Apparatus according to claim 7 or 8, characterised in that the drying material support (8) is formed of trays which are arranged one above the other and which are surrounded by a cylindrical condenser (4).

10. Apparatus according to claim 9, characterised in that the drying material support and the condenser are formed by two spiral or helical surfaces fitted one within the other.

11. Dried goods of the foodstuffs and pharmaceutical industries with a water content appropriate to preservation whose cell structure, protein, and content of flavour and aroma substances and of active agents correspond substantially to those of the non-dried goods, obtainable with the process according to claim 1.